# EUROPÄISCHE PATENTSCHRIFT

(11) **EP 0 600 344 B1**
(45) Veröffentlichungstag und Bekanntmachung des Hinweises auf die Patenterteilung: **29.01.1997**
(21) Anmeldenummer: 93118824.7
(22) Anmeldetag: 23.11.1993
(51) Int. Cl.: F16L 23/16, F16L 55/172

(54) **Leckabdichtungsvorrichtung für Flanschverbindungen**
Leak sealing device for flanged joints
Dispositif d'étanchement de fuites pour raccords à brides

(30) Priorität: 01.12.1992 DE 9216332 U
(43) Veröffentlichungstag der Anmeldung: 08.06.1994
(73) Patentinhaber: Furmanite Technische Dienstleistungen GmbH, 60327 Frankfurt (DE)
(72) Erfinder: Osterlitz, Hermann, Dipl.-Ing., D-65189 Wiesbaden (DE); Grob, Oliver, D-42279 Wuppertal (DE)
(74) Vertreter: Weber, Otto Ernst, Dipl.-Phys.

(56) Entgegenhaltungen:
- EP-A- 0 029 338
- EP-A- 0 243 549
- GB-A- 952 755
- GB-A- 2 138 903

## Beschreibung

Die Erfindung betrifft eine Leckabdichtungsvorrichtung für Flanschverbindungen, mit einer in zumindest zwei Elemente in einer ersten Ebene querteilbaren Dichtungsklammer, die abdichtend um den Umfang einer Flanschverbindung herum daran anlegbar ist.

Eine derartige Leckabdichtungsvorrichtung aus der EP 0 243 549 A2 bekannt. Diese Leckabdichtungsvorrichtung wird um eine undichte Flanschverbindung klammerartig herumgelegt und radial gegen die Flanschverbindung verspannt, wobei zwischen dem Innenumfang der Leckabdichtungsvorrichtung und dem Außenumfang der Flanschverbindung gelegene Dichtungen das Leck abdichten. Nachteilig ist bei dieser bekannten Leckabdichtungsvorrichtung, daß die Flanschverbindung genau axial ausgerichtet sein muß.

Aufgabe der vorliegenden Erfindung ist es, eine Leckabdichtungsvorrichtung der eingangs genannten Gattung zu schaffen, die auch bei nicht genau fluchtenden Flanschverbindungen, bei sogenanntem Axialversatz, einsetzbar ist.

Diese Aufgabe wird gemäß dem kennzeichnenden Teil des Anspruchs 1 dadurch gelöst, daß die Dichtungsklammer im wesentlichen rechtwinklig zur ihrer Achse in einer zweiten Ebene teilbar ist, wobei die beiden aus jeweils zumindest zwei Dichtungsklammerelementen bestehenden Dichtungsklammerteile über erste Verbindungselemente in Axialrichtung zusammenspannbar sind, daß die jeweiligen Dichtungsklammerelemente eines Dichtungsklammerteils über zweite Verbindungselemente in Radialrichtung gegeneinander verspannbar sind, wobei dem ersten Dichtungsklammerteil zugeordnete Verbindungsmittel unabhängig von dem zweiten Dichtungsklammerteil zugeordneten Verbindungsmitteln derart verstellbar sind, daß eine radiale Verschiebung des ersten Dichtungsklammerteils bezüglich des zweiten Dichtungsklammerteils ermöglicht ist.

Aufgrund der Teilbarkeit der Dichtungsklammer in einer im wesentlichen rechtwinklig zu ihrer Achse verlaufenden Ebene und der radialen Verstellbarkeit kann die Dichtungsklammer einen Flanschversatz ausgleichen, indem jeweils ein Dichtungsklammerteil einen Flansch einer Flanschverbindung abdichtend umschließt und indem die beiden Dichtungsklammerteile gegeneinander versetzt und axial abdichtend aneinander gehalten werden.

Vorteilhaft ist eine Weiterbildung gemäß Anspruch 2, bei der die mit Verbindungsmitteln versehenen jochartigen Klammeraufnahmen einerseits eine zuverlässige radiale Verspannung eines jeden Dichtungsklammerteils und andererseits eine genaue Versatzverstellung der Dichtungsklammerteile gegeneinander gestatten. Dabei sind die Ausgestaltungen gemäß der Ansprüche 3 bis 5 besonders vorteilhaft, da durch diese Ausgestaltungen eine sichere axiale Verspannung bei gleichzeitiger ausreichender radialer Verschiebbarkeit ermöglicht ist.

Besonders vorteilhaft ist die Ausgestaltung gemäß Anspruch 6, da durch sie nicht nur eine radiale Verstellung und damit ein radialer Versatzausgleich der Flanschverbindung ermöglicht wird sondern durch die Einsetzbarkeit von unterschiedlich langen Einsatzstücken auch ein axialer Flanschabstand ausgeglichen werden kann.

Die Ausgestaltung gemäß Anspruch 7 gestattet eine zusätzliche sichere Abdichtung des Lecks durch Einspritzen einer Dichtungsmasse in den von der Dichtungsklammer und der Flanschverbindung umschlossenen Leckraum.

Die Erfindung wird nachfolgend anhand eines Beispiels unter Bezugnahme auf die Figuren näher erläutert; in dieser zeigt:
- Fig. 1: einen Längsschnitt durch eine obere Hälfte einer Dichtungsklammer,
- Fig. 2: eine Seitenansicht gemäß dem Pfeil II in Fig. 1,
- Fig. 3: eine jochartige Klammeraufnahme und

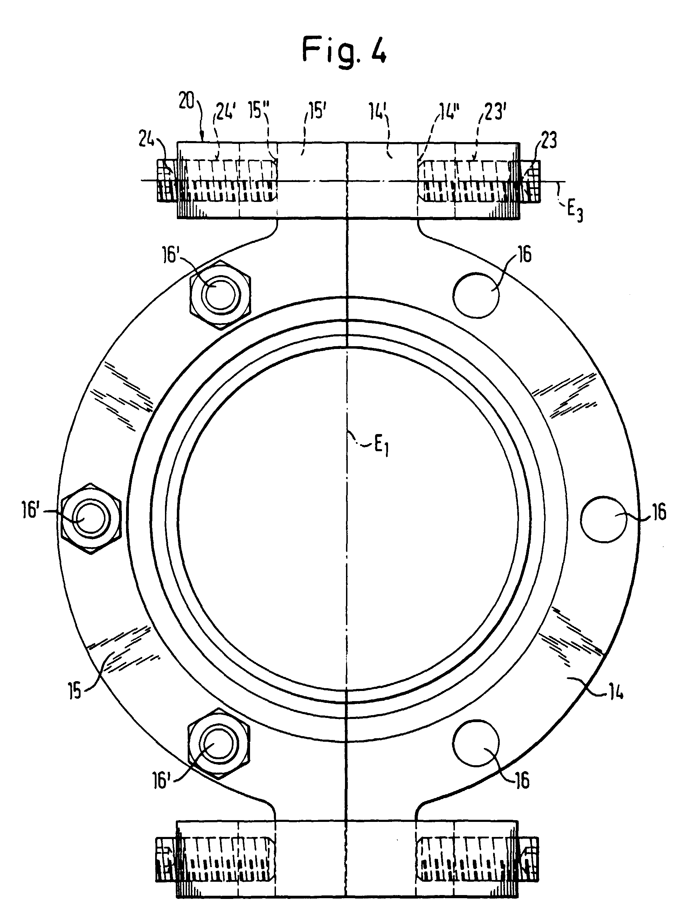

- Fig. 4: eine Ansicht einer montierten Dichtungsklammer in Axialrichtung (Pfeil IV).

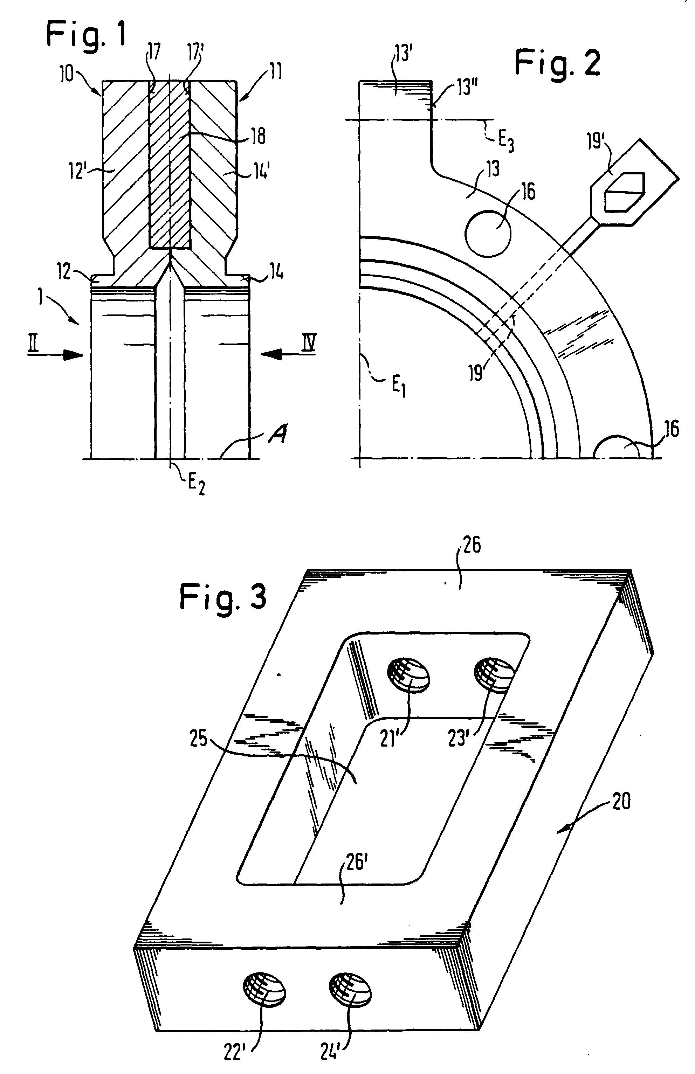

In Fig. 1 ist eine Dichtungsklammer 1 dargestellt, die in einer Ebene E₂ rechtwinklig zur Achse einer von der Dichtungsklammer zu umfassenden Flanschverbindung geteilt ist, aus zwei im wesentlichen kreisringförmigen Dichtungsklammerteilen 10, 11 besteht, welche jeweils entlang einer ersten Ebene E₁ in zwei Dichtungsklammerelemente (12, 13; 14, 15) geteilt sind. Auf diese Weise sind die Dichtungsklammerteile jeweils von außen um eine Flanschverbindung herum anlegbar, indem ihre jeweiligen Dichtungsklammerelemente von zwei Seiten in Radialrichtung auf die Flanschverbindung gesetzt werden.

An seinem oberen und unteren Ende weist jedes Dichtungsklammerelement 12, 13, 14, 15 einen sich radial nach außen (oben bzw. unten) erstreckenden Ansatz 12', 13', 14', 15' auf, der jeweils eine im wesentlichen parallel zur ersten Ebene E₁ verlaufende Stirnseite 12" (nicht gezeigt), 13", 14", 15" aufweist. Beschrieben wird nachfolgend nur die obere Verbindung der Dichtungsklammerelemente; die untere ist analog ausgebildet.

Die in Fig. 3 dargestellte jochartige Klammeraufnahme 20 ist quaderförmig ausgebildet und mit einer inneren Ausnehmung 25 versehen. Die Ausnehmung 25 ist derart bemessen, daß sie die Ansätze 12', 13', 14', 15' eines jeden Dichtungsklammerelements aufnimmt. In zwei voneinander abgewandten Seiten 26, 26' der jochartigen Klammeraufnahme 20 sind jeweils zwei nebeneinander gelegene, mit Innengewinde versehene Durchgangsbohrungen 21', 22', 23', 24' vorgesehen. Die Achsen der Bohrungen verlaufen in einer zur Dichtungsklammer 1 tangentialen Ebene E₃ und rechtwinklig zur Achse A.

Die Bohrungen 21', 22', 23', 24' sind zur Aufnahme von Spann- und Verstellschrauben 21 (nicht gezeigt), 22 (nicht gezeigt), 23, 24 ausgebildet, die einerseits die beiden hälftigen Dichtungsklammerelemente eines jeden Dichtungsklammerteils gegeneinander spannen, und andererseits die beiden Dichtungsklammerteile in Radialrichtung durch unterschiedlich weites Eindrehen der jeweils nebeneinander gelegenen Schrauben verstellbar machen.

Zur axialen Verspannung der Dichtungsklammerteile 10, 11 sind in den Dichtungsklammerelementen achsparallele Bohrungen 16 vorhanden, die von Schrauben 16' durchgriffen werden. Der Durchmesser einer jeden Bohrung ist nicht nur geringfügig größer als der Durchmesser der zugeordneten Schraube, damit eine seitlice Relativverschiebung der Dichtungsklammerteile zueinander erfolgen kann. Die Bohrungen 16 können aber auch nur in einem Dichtungsklammerteil vorgesehen sein, während im anderen zugeordnete Gewindebohrungen für die Schrauben 16' vorgesehen sind.

Die Dichtungsklammerteile 10, 11 sind jeweils auf den einander zugewandten Seiten im Bereich ihres Umfangs mit einer Ausnehmung 17, 17' versehen, die jeweils zur Aufnahme eines axialen Endes eines Einsatzstücks 18 dient, welches im wesentlichen kreisringförmig ausgebildet ist und sich in Axialrichtung zwischen den beiden Dichtungsklammerteilen 10, 11 erstreckt. Durch ein derartiges Einsatzstück, das in unterschiedlichen vorgegebenen Längen vorrätig gehalten werden kann, läßt sich zudem ein axialer Flanschabstand ausgleichen.

Die einzelnen Dichtungsklammerelemente 12, 13, 14, 15 sind im Bereich ihres umfangs mit die Wandung im wesentlichen radial durchdringenden Durchtrittsöffnungen 19 versehen, die zum Einspritzen einer Dichtungsmasse in den von der Dichtungsklammer und dem Flansch umschlossenen Leckraum dienen. Die Durchtrittsöffnungen 19 können an ihrer radialen Außenseite mit Adaptern 19' verbunden sein, die den Anschluß einer Einspritzeinrichtung zum Einspritzen einer compoundartigen Dichtungsmasse gestatten. Zur Vermeidung des Austritts von Leckagefluid aus den Adaptern 19' können diese ventilartig ausgebildet sein.

## Patentansprüche

1. Leckabdichtungsvorrichtung für Flanschverbindungen, mit einer in zumindest zwei Elemente (12, 13; 14, 15) in einer ersten Ebene (E₁) querteilbaren Dichtungsklammer (1), die abdichtend um den Umfang einer Flanschverbindung herum daran anlegbar ist,
dadurch **gekennzeichnet**,
daß die Dichtungsklammer (1) im wesentlichen rechtwinklig zur ihrer Achse (A) in einer zweiten Ebene (E₂) teilbar ist, wobei die beiden aus jeweils zumindest zwei Dichtungsklammerelementen (12, 13; 14, 15) bestehenden Dichtungsklammerteile (10, 11) über erste Verbindungselemente (16') in Axialrichtung zusammenspannbar sind, daß die jeweiligen Dichtungsklammerelemente (12, 13; 14, 15) eines Dichtungsklammerteils (10; 11) über zweite Verbindungselemente (20, 21, 22, 23, 24) in Radialrichtung gegeneinander verspannbar sind, wobei dem ersten Dichtungsklammerteil (10) zugeordnete Verbindungsmittel (21, 22) unabhängig von dem zweiten Dichtungsklammerteil (11) zugeordneten Verbindungsmitteln (23, 24) derart verstellbar sind, daß eine radiale Verschiebung des ersten Dichtungsklammerteils (10) bezüglich des zweiten Dichtungsklammerteils (11) ermöglicht ist.

2. Leckabdichtungsvorrichtung nach Anspruch 1,
dadurch **gekennzeichnet**,
daß jedes Dichtungsklammerelement (12, 13, 14, 15) im Bereich der ersten Querteilebene (E₁) mit einem sich radial nach außen erstreckenden Ansatz (12', 13', 14', 15') versehen ist, daß jochartige Klammeraufnahmen (20) vorgesehen sind, die jeweils die einander benachbarten Ansätze (12', 13', 14', 15') der vier Dichtungsklammerelemente (12, 13, 14, 15) in einer im wesentlichen tangentialen Ebene (E₃) umgreifen und
daß in der Wandung einer jeden Klammeraufnahme (20) in der Tangentialebene (E₃) und im wesentlichen rechtwinklig zur Achse (A) die als Spann- und Verstelleinrichtungen wirkenden Verbindungsmittel (21, 22, 23, 24) vorgesehen sind, die jeweils von außen auf den zugeordneten Ansatz (12', 13', 14', 15') drücken.

3. Leckabdichtungsvorrichtung nach Anspruch 1 oder 2,
dadurch **gekennzeichnet** ,
daß die Dichtungsklammerteile (10, 11) mit achsparallelen Bohrungen (16) versehen sind und daß die in Axialrichtung wirkenden ersten Verbindungselemente (16') von Schraubbolzen gebildet sind, wobei zumindest die Bohrungen eines Dichtungsklammerteils jeweils im Durchmesser wesentlich größer sind als der Durchmesser der zugehörigen Schraubbolzen.

4. Leckabdichtungsvorrichtung nach Anspruch 3,
dadurch **gekennzeichnet**,
daß die Bohrungen (16') in beiden Dichtungsklammerteilen (10, 11) im Durchmesser wesentlich größer sind als der Durchmesser des zugeordneten Schraubbolzens (16).

5. Leckabdichtungsvorrichtung nach Anspruch 3 oder 4,
dadurch **gekennzeichnet,**
daß der Durchmesser einer jeden größeren Bohrung etwa das 1,5 bis 2-fache des Schraubbolzendurchmessers beträgt.

6. Leckabdichtungsvorrichtung nach einem der vorhergehenden Ansprüche,
dadurch **gekennzeichnet**,
daß die Dichtungsklammerteile (10, 11) auf den einander zugewandten Seiten jeweils einen Umfangsabschnitt (17, 17') aufweisen, der zur abdichtenden Aufnahme eines sich axial erstreckenden, im wesentlichen kreisringförmigen und entlang einer Axialebene teilbaren Einsatzstücks (18) aufweist.

7. Leckabdichtungsvorrichtung nach einem der vorhergehenden Ansprüche,
dadurch **gekennzeichnet**,
daß die Dichtungsklammerelemente (12, 13, 14, 15) vorzugsweise im Bereich ihres Umfangs die Wandung durchdringende Durchtrittsöffnungen (19) zum Einspritzen einer Dichtungsmasse aufweisen.

## Claims

1. Leak sealing device for flanged joints, with a sealing clamp (1) transversely divisible into at least two elements (12, 13; 14, 15) in a first plane (E₁) and which can be sealingly applied round and to the flanged joint, characterized in that the sealing clamp (1) is divisible in a second plane (E₂) substantially at right angles to its axis (A), the two sealing clamp parts (10, 11) comprising in each case at least two sealing clamp elements (12, 13; 14, 15) can be clamped together axially by means of first joining elements (16'), that the sealing clamp elements (12, 13; 14, 15) of a sealing clamp part (10, 11) can be radially braced against one another by means of second joining elements (20, 21, 22, 23, 24), the joining means (21, 22) associated with the first sealing clamp part (10) being adjustable independently of the joining means (23, 24) associated with the second sealing clamp part (11) in such a way as to permit a radial displacement of the first sealing clamp part (10) with respect to the second sealing clamp part (11).

2. Leak sealing device according to claim 1, characterized in that each sealing clamp element (12, 13, 14, 15) in the vicinity of the first transverse dividing plane (E₁) is provided with a radially outwardly extending lug (12', 13', 14', 15'), that yoke-like clamp receptacles (20) are provided in each case engaging round the adjacent lugs (12', 13', 14', 15') of the four sealing clamp elements (12, 13, 14, 15) in a substantially tangential plane (E₃), that in the wall of each clamp receptacle (20) in the tangential plane (E₃) and substantially at right angles to the axis (A) are provided the joining means (21, 22, 23, 24) acting as clamping and adjusting devices and which in each case press from the outside onto the associated lug (12', 13', 14', 15').

3. Leak sealing device according to claim 1 or 2, characterized in that the sealing clamp parts (10, 11) are provided with axially parallel bores (16) and that the first joining elements (16') acting in the axial direction are formed by threaded bolts and at least the bores of a first sealing clamp part have a much larger diameter than the diameter of the associated threaded bolt.

4. Leak sealing device according to claim 3, characterized in that the bores (16') in both sealing clamp parts (10, 11) have a much larger diameter than the diameter of the associated threaded bolt (16).

5. Leak sealing device according to claim 3 or 4, characterized in that the diameter of each larger bore is approximately 1.5 to 2 times the threaded bolt diameter.

6. Leak sealing device according to one of the preceding claims, characterized in that the sealing clamp parts (10, 11) at the sides facing each other comprise a circumferential portion (17, 17') respectively for the sealing reception of an axially extending, substantially circular ring-shaped insert (18) dividable along an axial plane.

7. Leak sealing device according to one of the preceding claims, characterized in that the sealing clamp elements (12, 13, 14, 15), preferably in the vicinity of the circumference thereof have passage openings (19), which penetrate the wall for the injection of a sealing compound.

## Revendications

1. Dispositif d'étanchéité aux fuites pour assemblages par brides, avec un collier d'étanchéité (1) divisible transversalement en au moins deux éléments (12, 13 ; 14, 15) dans un premier plan (E₁), collier qui peut être posé sur et autour de la périphérie d'un assemblage par brides, ***caractérisé en ce que*** le collier d'étanchéité (1) est divisible pour l'essentiel perpendiculairement à son axe (A) dans un deuxième plan (E₂), les deux parties de collier d'étanchéité (10, 11) constituées chacune d'au moins deux éléments de collier d'étanchéité (12, 13 ; 14, 15) pouvant être assemblées l'une à l'autre dans la direction axiale par l'intermédiaire de premiers éléments d'assemblage (16'), ***en ce que*** les éléments de collier d'étanchéité respectifs (12, 13; 14, 15) d'une partie de collier d'étanchéité (10 ; 11) peuvent être serrés l'un à l'autre dans la direction radiale par l'intermédiaire de deuxièmes éléments de serrage (20, 21, 22, 23, 24), des moyens d'assemblage (21, 22) associés à la première partie de collier d'étanchéité (10) étant réglables indépendamment de moyens d'assemblage (23, 24) associés à la deuxième partie de collier d'étanchéité (11), de telle manière qu'un déplacement radial de la première partie de collier d'étanchéité (10) par rapport à la deuxième partie de collier d'étanchéité (11) soit rendu possible.

2. Dispositif d'étanchéité aux fuites selon la Revendication 1, ***caractérisé en ce que*** chaque élément de collier d'étanchéité (12, 13, 14, 15) est muni au niveau du premier plan de division transversale (E₁) d'un appendice (12', 13', 14', 15') s'étendant vers l'extérieur dans le sens radial, ***en ce que*** des logements de collier en forme de joug (20) sont prévus, qui saisissent respectivement les appendices voisins les uns des autres (12', 13', 14', 15') des quatre éléments de collier d'étanchéité (12, 13, 14, 15) dans un plan sensiblement tangentiel (E₃), et ***en ce que*** c'est dans la paroi de chaque logement de collier (20), dans le plan tangentiel (E₃) et pour l'essentiel perpendiculairement à l'axe (A), que sont prévus les éléments d'assemblage (21, 22, 23, 24) agissant en tant que dispositifs de serrage et de réglage, lesquels appuient chacun de l'extérieur sur l'appendice associé (12', 13', 14', 15').

3. Dispositif d'étanchéité aux fuites selon la Revendication 1 ou 2, ***caractérisé en ce que*** les éléments de collier d'étanchéité (10, 11) sont munis de perçages (16) parallèles à l'axe, et ***en ce que*** les premiers éléments d'assemblage (16') actifs dans la direction axiale sont formés de goujons filetés, au moins les perçages d'une partie de collier d'étanchéité étant de diamètre largement plus grand que le diamètre des goujons filetés associés.

4. Dispositif d'étanchéité aux fuites selon la Revendication 3, ***caractérisé en ce que*** les perçages (16') dans les deux parties de collier d'étanchéité (10, 11) sont de diamètre largement plus grand que le diamètre du goujon fileté (16) associé.

5. Dispositif d'étanchéité aux fuites selon la Revendication 3 ou 4, ***caractérisé en ce que*** le diamètre de chaque perçage plus grand vaut approximativement 1,5 à 2 fois le diamètre du goujon fileté.

6. Dispositif d'étanchéité aux fuites selon l'une quelconque des Revendications précédentes, ***caractérisé en ce que*** les parties de collier d'étanchéité (10, 11) présentent sur les faces en vis-à-vis l'une de l'autre chacune une section de périphérie (17, 17') qui sert à recevoir de manière étanche un insert (18) sensiblement en forme d'anneau circulaire, d'extension axiale et divisible le long d'un plan axial.

7. Dispositif d'étanchéité aux fuites selon l'une quelconque des Revendications précédentes, ***caractérisé en ce que*** les éléments de collier d'étanchéité (12, 13, 14, 15) présentent de préférence au niveau de leur pourtour des passages (19) traversant la paroi et destinés à l'injection d'une masse d'étanchéité.
